# EUROPEAN PATENT SPECIFICATION

(11) **EP 1 911 200 B1**
(45) Date of publication and mention of the grant of the patent: **07.01.2009**
(21) Application number: 06755702.5
(22) Date of filing: 03.07.2006
(51) Int. Cl.: H04L 12/24

(54) **NETWORK INFORMATION ACQUISITION**
NETZWERKINFORMATIONS-BESCHAFFUNG
ACQUISITION D'INFORMATIONS DE RESEAU

(30) Priority: 29.07.2005 MY 0503530; 17.10.2005 EP 05256428
(43) Date of publication of application: 16.04.2008
(73) Proprietor: BRITISH TELECOMMUNICATIONS public limited company, London, Greater London EC1A 7AJ (GB)
(72) Inventor: NG, See, Leng,4A-04-07 Saraka Apartment, Selangor, 47100 (MY); HOH, Simon, Perdana Klang, Selangor, 41200 (MY); LIM, Fang, Liang, Subang Jaya, Selangor, 47500 (MY); SINGH, Devinder, 15 Jalan Ss21/21, Selangor, 47400 (MY)
(74) Representative: Wilson, Peter David
(86) International application number: PCT/GB2006/002469
(87) International publication number: WO 2007/012800

(56) References cited:
- US-A1- 2004 042 601
- US-A1- 2004 054 723
- US-A1- 2005 136 898
- US-B1- 6 931 028

## Description

This invention relates to a method of and apparatus for acquiring network information from a network.

Adaptive applications are software applications that can adjust their resource usage or behaviour to compensate for variations in the level of service that they receive. For example, an adaptive audio codec switching application can analyse the packet loss and jitter experienced by the receiver and then switch codec appropriately. The packet loss and jitter are examples of network diagnostic information that can be requested from the network to which the receiver is connected.

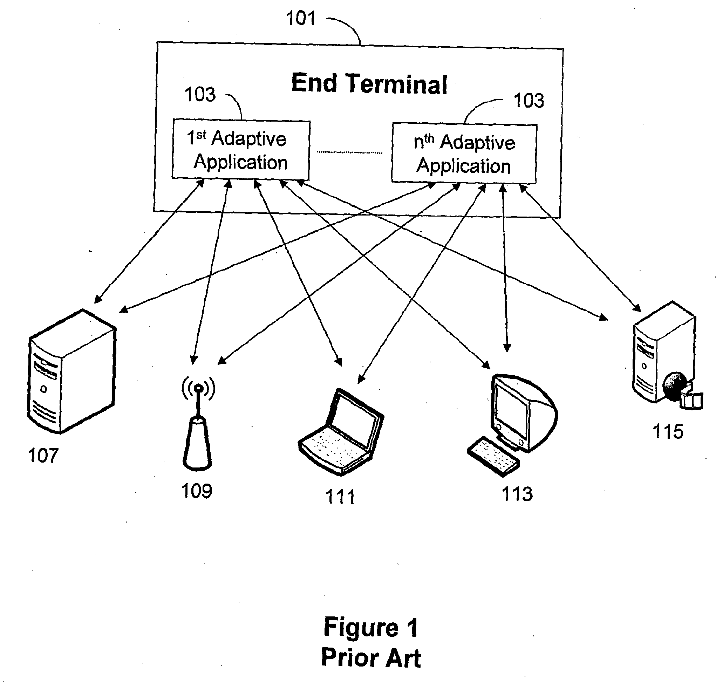

Figure 1, which depicts a system as is generally known in art, shows an end terminal 101 according to the prior art. End terminal is a term used to refer to any device used by an end user, e.g. a standard desktop computer. Also shown are adaptive applications 103, which are installed on end terminal 101, and a plurality of target terminals. Target terminal is a term used to refer to any network device that can be targeted/queried for network diagnostic information (e.g. IP address, bandwidth available, signal strength, etc.) Target terminals include server 107, access point 109, laptop computer 111, desktop computer 113 and web server 115.

Adaptive applications 103 request network diagnostic information from one or more target terminals by forming connections (e.g. over an internet or intranet) with the target terminal. Adaptive applications 103 then use that information to adjust/adapt their resource usage and/or behaviour.

Adaptive applications 103 would send a query to a target terminal each time a piece of network diagnostic information is required. Thus an adaptive application might end up repeating the same query over and over again. Moreover, two adaptive applications might be requesting the same piece of network diagnostic information and both may send the same query to the same target terminal. These multiple, duplicate queries increase the amount of traffic in the network, increase the time to process the requests and increase the level of processing resources required to handle the requests.

US2005136898 discloses the use of a service management centre to deliver services to wireless terminals which are capable of supporting multiple radio interfaces. The service management centre determines the set of services and parameters based on the capability and service profile of the wireless terminal.

According to a first aspect of the present invention there is provided a method of acquiring information from a network, said network comprising an end terminal and a target terminal, said end terminal having installed thereon (a) a plurality of applications; and (b) mediation means arranged in operation to mediate between said plurality of applications and said target terminal, said method comprising:
(i) receiving at said mediation means a query from one of said plurality of applications, said query requesting information from a target terminal;
(ii) operating said mediation means to:
   check if there is an existing connection to said target terminal;
   in the absence of an existing connection, establish a new connection between said mediation means and said target terminal; and
   acquire said requested information over said new connection.

By using mediation means to mediate between applications installed on an end terminal (which require network information) and a target terminal (which provides network information) such that a connection between the mediation means and the target terminal is set up only in the absence of an existing connection between the mediation means and the target terminal, the number of queries from applications that are sent across the network to target terminals is reduced and duplicated queries can be prevented. This results in a reduction in network traffic, shortened times to process queries and also a reduction in the processing resources needed to respond to the query. One connection can be used to provide network information to two applications unlike past practise where each individual application would independently request the same network information from the target terminal. Preferably, the method further comprises operating said mediation means, in the presence of an existing connection to said target terminal, to use said existing connection to said target terminal to acquire said requested network information. Thus a new connection to a target terminal, that may duplicate an already existing connection, need not be established. This reduces processing time and saves on processing resources.

Preferably, said mediation means comprises an information store, wherein said store stores network information previously acquired from said target terminal, and said method further comprises operating said mediation means to:
check if said requested network information is contained in said information store
in the absence of said requested network information in said information store, establish a new connection between said mediation means and said target terminal; and
acquire said requested network information over said new connection.

In this way, network diagnostic information previously acquired from a targeting terminal can be stored and is reusable. Thus network information is not acquired from the target terminal more times than is necessary. Again, this reduces the level of network traffic, processing times and also saves on processing resources.

Preferably, the method further comprises operating said mediation means, in the presence of said requested network information in said information store, to acquire said requested network information from said information store. Thus a new connection to a target terminal, that may duplicate an already existing connection, need not be established. This reduces processing time and saves on processing resources.

Preferably, said method further comprises sending said requested network information to said application and using said requested network information to control the operation of said application. Thus applications that require network information in order to adapt their behaviour and/or their network resource usage can be provided with that information in an efficient manner.

Preferably, said mediation means further comprises translation means and said method further comprises:
translating said query into a format understood by said target terminal;
sending said query to said target terminal;
receiving a response to said query, said response comprising said requested network information;
translating said response into a format understood by said mediation means.

In this way, queries can be submitted to the mediation means in a common format understood by the mediation means, but sent to the target terminal in an appropriate format that will be understood by the target terminal. Thus any target terminal can be easily be queried by the mediator.

According to a second aspect of the present invention there is provided apparatus for acquiring network information from a network, said network comprising an end terminal and target terminals, said apparatus comprising mediation means arranged in operation to mediate between applications installed in said end terminal and said target terminals, said mediation means comprising:
receiving means arranged in operation to receive a query from an application, said query requesting network information from a target terminal
checking means arranged in operation to check if there is an existing connection to said target terminal;
connection establishment means arranged in operation to establish a new connection to said target terminal in the absence of an existing connection;
information acquisition means arranged in operation to acquire said requested network information over said new connection.

According to a third aspect of the present invention there is provided a digital data carrier carrying a program of instructions executable by processing apparatus to perform the method steps as set out in the first aspect of the present invention.

Other aspects of the present invention are defined in the claims.

Embodiments of the present invention will now be described, by way of example only, with reference to the accompanying drawings, wherein like reference numbers refer to like parts, and in which:
Figure 1 shows a system according to the prior art;
Figure 2 shows a system according to embodiments of the present invention;
Figure 3 is a block diagram showing details of the centralised diagnostic agent of figure 2;
Figures 4 and 5 are message flow diagrams showing operation of the system according to a first embodiment of the present invention; and
Figures 6 and 7 are message flow diagrams showing operation of the system according to a second embodiment of the present invention.

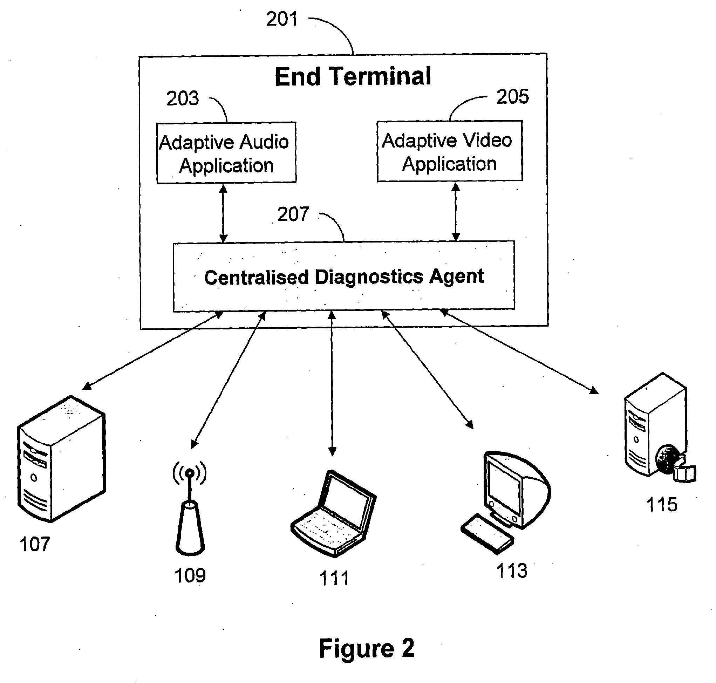

Figure 2, which depicts a system according to embodiments of the present invention, shows an end terminal 201. In the present embodiment, end terminal 201 comprises a standard desktop computer as is generally known in the art. Further examples of end terminals are laptop (notebook) or palmtop computers, personal digital assistants (PDA) and mobile telephones and other types of end terminals will be apparent to someone skilled in the art.

Installed in end terminal 201 are two adaptive applications - adaptive audio application 203 and adaptive video application 205 - although it is also possible that additional adaptive applications could be installed. Adaptive audio application 203 may comprise the Adaptive Jitter Buffer implementation of Ittiam Systems (P) Ltd., India whilst adaptive video application 205 may comprise the Fastnets technology available from British Telecommunications plc, UK.

A centralised diagnostic agent 207 is additionally installed in end terminal 201. In the present embodiments, centralised diagnostic agent 207 comprises a software application written in the Java programming language. Centralised diagnostics agent 207 has connections with adaptive audio application 203 and adaptive video application 205 and acts as a mediator between adaptive applications 203/205 (which require network diagnostic information for processing purposes) and target terminals (which provide the network diagnostic information). Like in figure 1, target terminals include server 107, access point 109, laptop computer 111, desktop computer 113 and web server 115. Other types of target terminal will be apparent to someone skilled in the art but may include gateways, routers, base stations etc.

Adaptive audio application 203 and adaptive video application 205 request network diagnostic information from one or more target terminals by forming connections with the target terminals in order to request the required network diagnostic information. The nature of such connections, although not explicitly shown in figure 2, will be apparent to someone skilled in the art, and may include, for example, connections over the internet, an intranet, a local, wide or metropolitan area network, a wireless network (e.g. GSM, CDMA or WiFi network, Bluetooth), etc.

Adaptive applications 103 then use that information to adjust/adapt their resource usage and/or behaviour. Some examples of the sort of network diagnostic information that could be requested from the different sorts of target terminals are given below.
Server - file size, host destination, CPU usage, network utilisation, etc.
Access point - IP address, signal strength, data rate, bandwidth available, bandwidth utilised, packet loss rate, etc.
Laptop/Desktop/Palmtop - IP address, CPU usage, storage usage, etc.
Web server- data transfer rate, data transfer size, host destination, round trip time (RTT), etc.
Gateway/Router- RTT, IP address, network address translator (NAT) mapping, etc.
Base station - location of base station, location of terminals attached to base station, signal strength, etc.

Other examples will be apparent to someone skilled in the art.

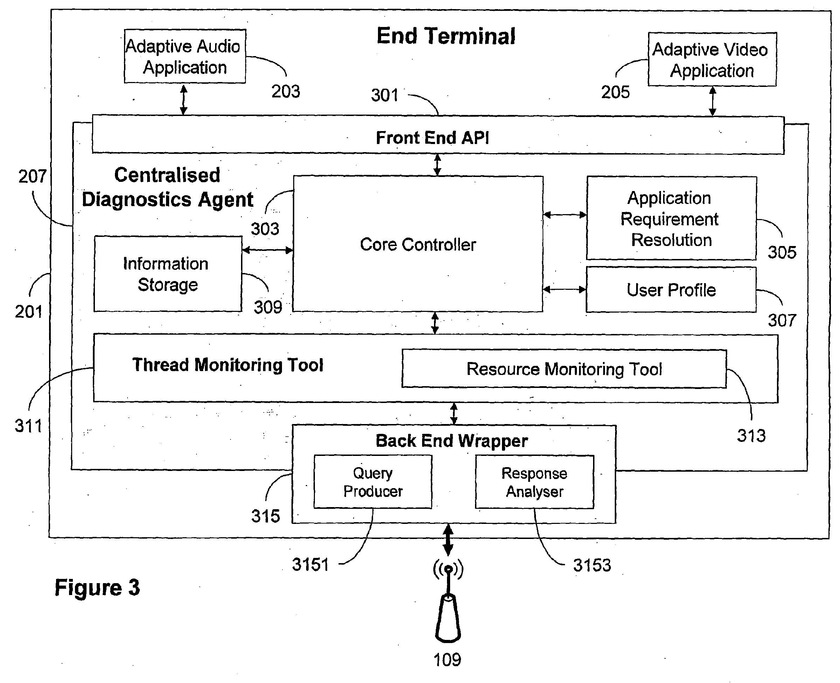

The centralised diagnostic agent 207 and its component parts/modules will now be described with reference to figure 3.

Front end application programming interface (API) 301 is an interface that offers adaptive applications 203/205 uniform access to the centralised diagnostics agent 207. Adaptive applications 203/205 can send requests to the centralised diagnostic agent 207 that specify certain application requirements. Examples of application requirements may include, for example, what network diagnostic information is needed and the target terminal from which to acquire it, what protocol(s) is/are supported/to be used, the network capacity needed, which resources (e.g. memory, port) are required to acquire the network diagnostic, the duration to monitor the network diagnostic, etc. Other application requirements that could be specified by adaptive applications 203/205 will be apparent to someone skilled in the art.

In the present embodiment, this is achieved using common function calls of the form: getNetworkDiagnostic() and setApplicationRequirement() - e.g. getSignalStrength(Access Point 1) and setProtocol(SIP).

Front end API 301 is connected to core controller module 303. Requests sent by adaptive applications 203/205 and received at front end API 301 are passed to core controller module 303, which acts as the main processor of the centralised diagnostic agent 301.

Attached to core controller 303 is application requirement resolution module 305, which identifies the requirements specified by adaptive applications 203/205 in the common function calls, processes the requirements and sends them back to core controller 303.

Thread monitoring tool 311, also connected to core controller module 303, monitors back end wrapper threads. Back end wrapper threads send the queries for network diagnostic information to the appropriate target terminal (network resource) and receive the responses from the terminal. One such back end wrapper thread 315 is shown in figure 3 communicating with a target terminal in the form of access point 109. As will be explained in more detail later, a back end wrapper thread is established when there is not already an established back end wrapper thread monitoring/retrieving the same network diagnostic information.

Back end wrapper 315 consists of query producer 3151 and response analyser 3153. Query producer 3151 communicates with the target terminal by producing queries conforming to different proprietary standards (e.g. Real Time Transfer Protocol (RTP), Real Time Control Protocol (RTCP), Simple Network Management Protocol (SNMP), Windows Management Instrumentation (WMI), Session Initiation Protocol (SIP) etc.) depending on the proprietary standard that has been defined by the respective interface specifications of the target terminal. Response analyser 3153 receives proprietary network diagnostic information from the target terminal and translates it into a common format that is recognised by the centralised diagnostic agent 207.

Thread monitoring tool 311 sends the retrieved network diagnostic information back to core controller 303, from where it can be delivered to the adaptive application that requested it.

Resource monitoring tool 313, which forms part of thread monitoring tool 311, discovers the resources of the end terminal that are available for query producer 3151 to use and monitors the usage of those resources. For example, resource monitoring tool 313 will identify the memory in end terminal 201 that is free and available and will then allocate that memory to the process of establishing a back end wrapper. When the back end wrapper is not needed anymore, the resource monitoring tool 313 will free the allocated memory for future use by other processes. As a further example, resource monitoring tool 313 can check for the ports that are available in end terminal 101 to send/receive queries to/from the target terminals. It can then send details of the port to thread monitoring tool 311 to use in establishing a back end wrapper with the appropriate target terminal. Other resources that can be managed/monitored by resource monitoring tool 313 will be apparent to someone skilled in the art.

In some embodiments, core controller module 303 can also be connected to an optional information storage module 309 that stores network diagnostic information that has previously been requested by an adaptive application and retrieved by centralised diagnostic agent 207. In these embodiments, core controller 303 can be arranged in operation to check information storage module 309 for the availability of the specific network diagnostic information requested by an adaptive application 203/205. If the network diagnostic information requested by an adaptive application 203/205 is not available in information storage module 309, core controller 303 is arranged in operation to send a request to thread monitoring tool 311. In these embodiments, when thread monitoring tool 311 sends retrieved network diagnostic information back to core controller 303, it would also send the information to information storage module 309 to be stored for future usage by the same or by a different adaptive application

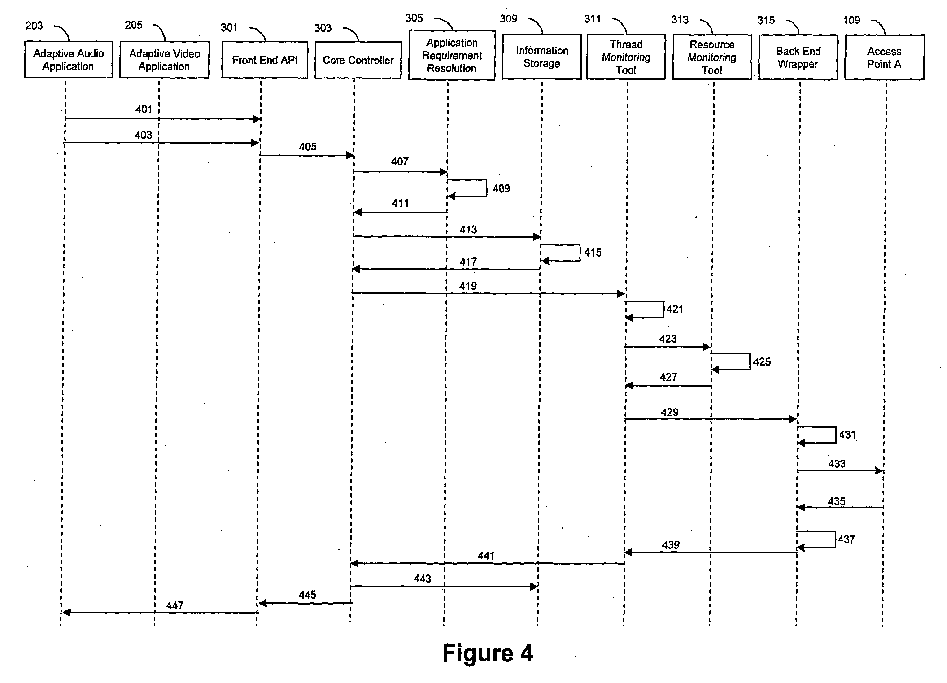

The operation of centralised diagnostic agent 207 will now be described with reference to figures 4 to 7.

In the following described embodiments, adaptive audio application 203 and adaptive video application 205 are installed and running on terminal 201, on which is also installed centralised diagnostic agent 207.

According to a first embodiment of the present invention, and with reference to figure 4, adaptive audio application 203 sends a request to acquire the IP address of a local/nearby access point (step 401). It also sets an application requirement (step 403) - use an SNMP query. The request is received at the centralised diagnostic agent 207 by front end API 301, which then passes the information on (step 405) to core controller 303. The core controller in turn passes the information on (step 407) to application requirement resolution module 305.

Application requirement module 305 then identifies the application requirements (step 409). By performing a scan for local/nearby access points, application requirement module 305 identifies access point 109. The application requirements (find IP address of access point 109 using SNMP query) are then passed back (step 411) to core controller 303.

In this first embodiment, the optional information storage module 309 is included in centralised diagnostic agent 207 and so core controller then queries information storage module 309 (step 413), which then checks to see if the IP address of access point 109 has previously been stored (step 415). In the present embodiment, the IP address of access point 109 is not available in information storage module 309 and thus information storage module sends a message to this effect back to core controller 303 (step 417).

Core controller 303 therefore passes the application requirements to thread monitoring tool 311 (step 419), which then checks to see if a thread for acquiring the IP address of access point 109 has already been established (step 421). In the present embodiment, no such thread exists and so thread monitoring tool 311 sends a request to resource monitoring tool 313 (step 423) requesting a port from which it can send an SNMP query to access point 109. Resource monitoring tool 423 then checks for an available port (step 425) and returns an available port number to thread monitoring tool 311 (step 427). Thread monitoring tool 311 then establishes a back end wrapper 315 (step 429) to access point 109.

Query producer 3151 of back end wrapper 315 then generates an SNMP query (step 431) and sends the query to access point 109 (step 433). Access point 109 responds to the query (again using SNMP) by returning its IP address (step 435). Response analyser 3153 of back end wrapper 315 then analyses the SNMP response (step 437) and returns the IP address of access point 109 to thread monitoring tool (step 439) in a format that is understood by centralised diagnostic agent 207.

Thread monitoring tool 311 then returns the IP address of access point 109 to core controller 303 (step 441). Core controller 303 then notifies information storage module 309 of the IP address of access point 109 and this information is thus stored for future use (step 443).

Core controller 303 then returns the IP address of access point 109 to front end API 301 (step 445) and finally, the IP address of access point 109 is returned to adaptive audio application 203 (step 447).

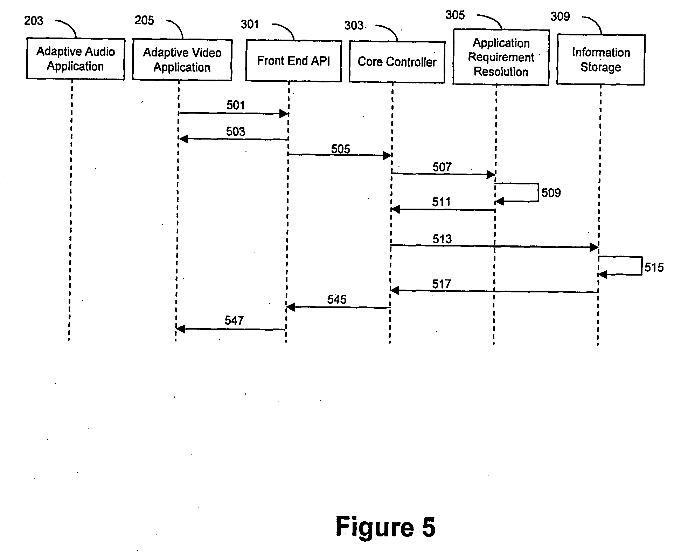

With reference to figure 5, adaptive video application 205 now sends a similar request to acquire the IP address of a local/nearby access point (step 501). It too sets an application requirement (step 503) - use an SNMP query.

The request is received at the centralised diagnostic agent 207 by front end API 301, which then passes the information on (step 505) to core controller 303. The core controller in turn passes the information on (step 507) to application requirement resolution module 305.

Application requirement module 305 then identifies the application requirements (step 509). By performing a scan for local/nearby access points, application requirement module 305 identifies access point 109. The application requirements (find IP address of access point 109 using SNMP query) are then passed back (step 511) to core controller 303.

Core controller then queries information storage module 309 (step 513), which then checks to see if the IP address of access point 109 has previously been stored (step 515). It will be remembered that the IP address of access point 109 was previously stored in information storage module 309 in response to a query from adaptive audio application 203 (step 443 of figure 4). Consequently, information storage module can return the IP address of access point 109 to core controller 303 (step 517) without having to query access point 109 again.

Thus, it was not necessary to establish a second back end wrapper to access point 109 and thus no additional processing resources were expended. Also, there was no additional network traffic created as a result of the query of adaptive video application 205.

Core controller 303 then returns the IP address of access point 109 to front end API 301 (step 545) and finally, the IP address of access point 109 is returned to adaptive video application 205 (step 547).

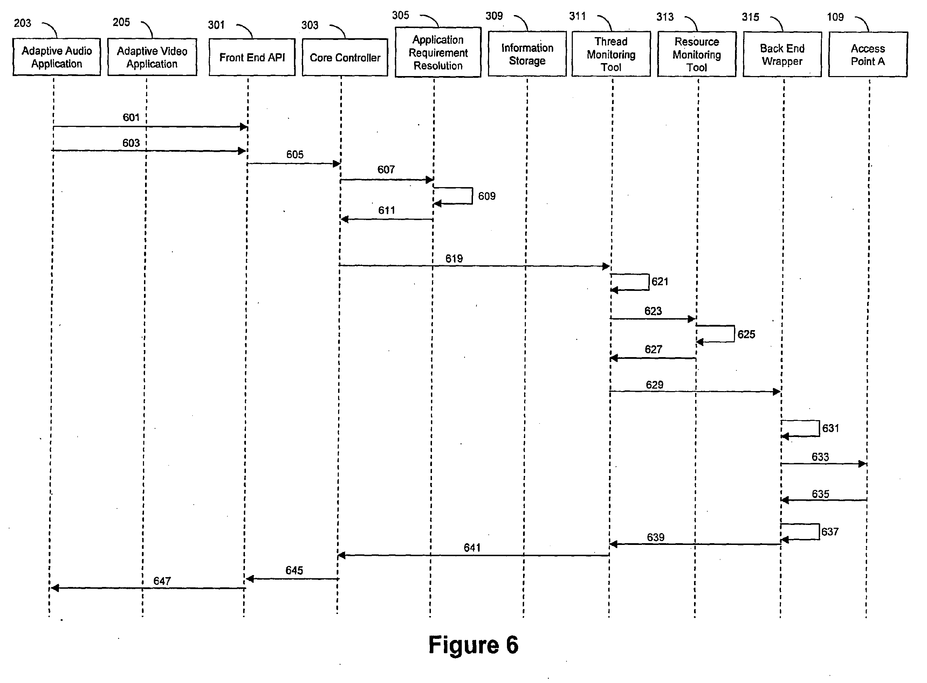

According to a second embodiment of the present invention, and with reference to figure 6, adaptive audio application 203 sends a request to acquire the bandwidth available at access point 109 (step 601). It also sets three application requirements (step 603) - the IP address of access point 109 (which, it will be remembered, was previously discovered as described above), use an SNMP query and monitor the bandwidth available at access point 109 every 2s for the duration of the audio session. The request is received at the centralised diagnostic agent 207 by front end API 301, which then passes the information on (step 605) to core controller 303. The core controller in turn passes the information on (step 607) to application requirement resolution module 305, which identifies the application requirements (step 609) and passes them back (step 611) to core controller 303.

In this second embodiment, because the query from adaptive audio application relates to real time information (i.e. the bandwidth currently available at access point 109, which is constantly changing) core controller does not query information storage module 309 and therefore core controller 303 passes the application requirements to thread monitoring tool 311 (step 619), which then checks to see if a monitoring thread for acquiring the bandwidth available at access point 109 has already been established (step 621). However, no such thread exists and so thread monitoring tool 311 sends a request to resource monitoring tool 313 (step 623) requesting a port from which it can send an SNMP query to access point 109. Resource monitoring tool 313 then checks for an available port (step 625) and returns an available port number to thread monitoring tool 311 (step 627). Thread monitoring tool 311 then establishes a back end wrapper 315 (step 629) and sets up a monitoring thread.

Query producer 3151 of back end wrapper 315 then generates an SNMP query (step 631) and sends the query to access point 109 (step 633). Access point 109 responds to the query (again using SNMP) by returning the bandwidth available (step 635) and continues to send the bandwidth available every 2s. Response analyser 3153 of back end wrapper 315 then analyses the SNMP response (step 637) and returns the bandwidth available at access point 109 to thread monitoring tool (step 639) in a format that is understood by centralised diagnostic agent 207.

Thread monitoring tool 311 then returns the bandwidth available at access point 109 to core controller 303 (step 641). Core controller 303 then returns the bandwidth available at access point 109 to front end API 301 (step 645) and finally, the bandwidth available at access point 109 is returned to adaptive audio application 203 (step 647).

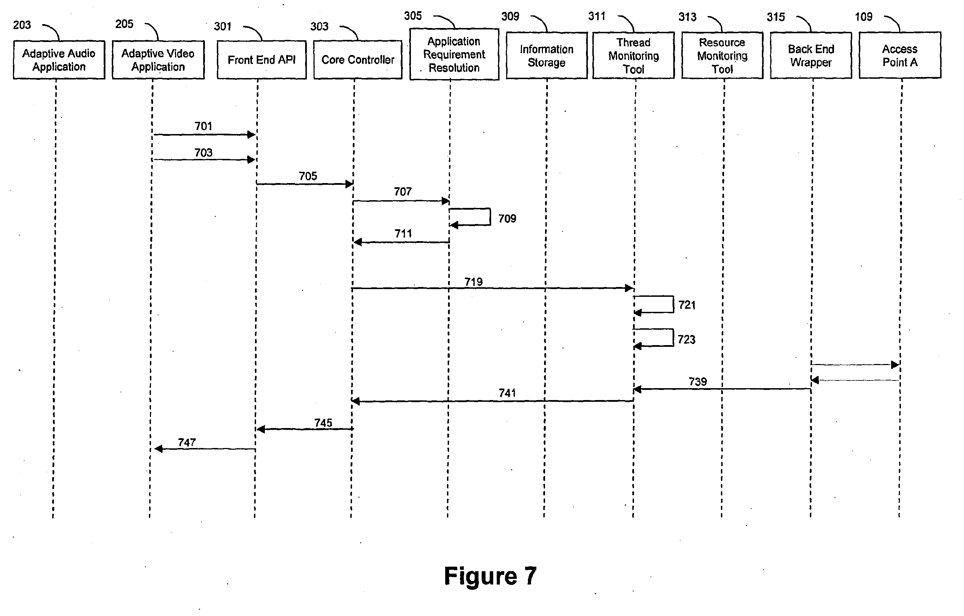

With reference to figure 7, adaptive video application 205 sends a similar request to acquire the bandwidth available at access point 109 (step 701). It also sets three application requirements (step 703) - the IP address of access point 109 (which, it will be remembered, was previously discovered as described above), use an SNMP query and monitor the bandwidth available at access point 109 every 2s for the duration of the video session. The request is received at the centralised diagnostic agent 207 by front end API 301, which then passes the information on (step 705) to core controller 303. The core controller in turn passes the information on (step 707) to application requirement resolution module 305, which identifies the application requirements (step 709) and passes them back (step 711) to core controller 303.

As described above in relation to figure 6, core controller 303 does not query information storage module 309 and instead passes the application requirements to thread monitoring tool 311 (step 719), which then checks to see if a monitoring thread for acquiring the bandwidth available at access point 109 has already been established (step 721). It will be remembered that such a monitoring thread was established in step 629 of figure 6. Thread monitoring tool 311 therefore waits for feedback from back end wrapper 315 with the information about the bandwidth available at access point 109 (step 723).

It was not necessary to establish a second band end wrapper and monitoring thread and thus no additional processing resources were expended and there was no additional network traffic created as a result of the query of adaptive video application 205.

Back end wrapper 315 returns the bandwidth available at access point 109 to thread monitoring tool (step 739), which then returns the bandwidth available at access point 109 to core controller 303 (step 741). Core controller 303 then returns the bandwidth available at access point 109 to front end API 301 (step 745) and finally, the bandwidth available at access point 109 is returned to adaptive video application 205 (step 747).

It will be apparent from the foregoing description that many modifications or variations may be made to the above described embodiments without departing from the invention. Such modifications and variations include:

In preferred embodiments, the application requirement resolution module 305 monitors the adaptive applications that are requesting network diagnostic information. When a requesting adaptive application is terminated, application requirement resolution module 305 can be arranged in operation to check whether there are any other applications that require the diagnostic information and if there are none, it can be arranged in operation to terminate the back end wrapper and thread that were established for the purpose of acquiring that network diagnostic information.

In some embodiments, a user profile module 307 can be connected to core controller 303. The user profile module 307 would store manual configuration data that may be set by users in order to customise the operation of centralised diagnostic agent 207. For example, users are able to set in advance the types of protocol that centralised diagnostic agent 207 can support (e.g. SNMP, RTP, SIP, WMI etc.), users are able to add plug-ins onto the centralised diagnostic agent 207 in order to support additional agent functionalities and/or to upgrade the agent, users are able to set in advance which network diagnostic(s) is/are to be monitored and how frequently etc. Other ways to manually configure the behaviour of centralised diagnostic agent 207 in order to provide users with additional flexibility will be apparent to someone skilled in the art.

## Claims

1. A method of acquiring network information from a network, said network comprising an end terminal (201) and a target terminal (107, 109, 111, 113, 115), said end terminal having installed thereon
(a) a plurality of applications (203, 205); and
(b) mediation means (207) arranged in operation to mediate between said plurality of applications and said target terminal, said method comprising:
(i) receiving at said mediation means (207) a query from one of said plurality of applications, said query requesting network information from a target terminal;
(ii) operating said mediation means to:
check if there is an existing connection to said target terminal;
in the absence of an existing connection, establish a new connection between said mediation means and said target terminal; and
acquire said requested network information over said new connection.

2. A method according to claim 1, further comprising operating said mediation means (207), in the presence of an existing connection to said target terminal (107, 109, 111, 113, 115), to use said existing connection to said target terminal to acquire said requested network information.

3. A method according to claims 1 or 2, wherein said mediation means (207) comprises an information store (309), wherein said store stores network information previously acquired from said target terminal (107, 109, 111, 113, 115), said method further comprising operating said mediation means to:
check if said requested network information is contained in said information store;
in the absence of said requested network information in said information store, establish a new connection between said mediation means and said target terminal; and
acquire said requested network information over said new connection.

4. A method according to any of claims 1 to 3, further comprising operating said mediation means (207), in the presence of said requested network information in said information store (309), to acquire said requested network information from said information store.

5. A method according to any of claims 1 to 4, further comprising sending said requested network information to said application and using said requested network information to adapt the operation of said application.

6. A method according to any preceding claim, wherein said network information comprises real-time network information.

7. A method according to any preceding claim, wherein said mediation means (207) further comprises translation means (3153) and said method further comprises:
translating said query into a format understood by said target terminal;
sending said query to said target terminal;
receiving a response to said query, said response comprising said requested network information;
translating said response into a format understood by said mediation means.

8. Apparatus for acquiring network information from a network, said network comprising an end terminal (201) and target terminals (107, 109, 111, 113, 115), said apparatus comprising mediation means (207) arranged in operation to mediate between applications installed in said end terminal and said target terminals, said mediation means comprising:
receiving means (315) arranged in operation to receive a query from an application, said query requesting network information from a target terminal
checking means (303) arranged in operation to check if there is an existing connection to said target terminal;
connection establishment means (305) arranged in operation to establish a new connection to said target terminal in the absence of an existing connection;
information acquisition means arranged in operation to acquire said requested network information over said new connection.

9. Apparatus according to claim 8, wherein said mediation means further comprises an information store (309) storing network information previously acquired from said target terminal; wherein said checking means (303) is further arranged in operation to check if said requested network information is contained in said information store; and said connection establishment means (305) is further arranged in operation to establish a new connection to said target terminal in the absence of said network information in said information store.

10. A digital data carrier carrying a program of instructions executable by processing apparatus to perform the method steps as set out in any of claims 1 to 7.

## Patentansprüche

1. Verfahren zum Akquirieren von Netzwerkinformation von einem Netzwerk, wobei das Netzwerk ein Endgerät (201) und ein Zielgerät (107, 109, 111, 113, 115) aufweist, wobei das Endgerät installiert hat
(a) eine Vielzahl von Anwendungen (203, 205); und
(b) Mediationsmittel (207), das ausgebildet ist, in Betrieb zwischen der Vielzahl von Anwendungen und dem Zielgerät zu vermitteln, wobei das Verfahren aufweist:
(i) Empfangen an dem Mediationsmittel (207) einer Abfrage von einer der Vielzahl von Anwendungen, wobei die Abfrage eine Netzwerkinformation von einem Zielgerät anfordert;
(ii) Betreiben des Mediationsmittels zum:
Prüfen, ob es eine existierende Verbindung zu dem Zielgerät gibt;
bei Fehlen einer existierenden Verbindung, Aufbauen einer neuen Verbindung zwischen dem Mediationsmittel und dem Zielgerät; und
Akquirieren der angeforderten Netzwerkinformation über die neue Verbindung.

2. Verfahren gemäß Anspruch 1, das weiter aufweist ein Betreiben des Mediationsmittels (207), bei Vorhandenseins einer existierenden Verbindung zu dem Zielgerät (107, 109, 111, 113, 115), zur Verwendung der existierenden Verbindung zu dem Zielgerät, um die angeforderte Netzwerkinformation zu akquirieren.

3. Verfahren gemäß Anspruch 1 oder 2, wobei das Mediationsmittel (207) einen Informationsspeicher (309) aufweist, wobei der Speicher eine Netzwerkinformation speichert, die von dem Zielgerät (107, 109, 111, 113, 115) akquiriert wurde, wobei das Verfahren weiter aufweist ein Betreiben des Mediationsmittels zum:
Prüfen, ob die angeforderte Netzwerkinformation in dem Informationsspeicher enthalten ist;
bei Fehlen der angeforderten Netzwerkinformation in dem Informationsspeicher, Aufbauen einer neuen Verbindung zwischen dem Mediationsmittel und dem Zielgerät; und
Akquirieren der angeforderten Netzwerkinformation über die neue Verbindung.

4. Verfahren gemäß einem der Ansprüche 1 bis 3, das weiter aufweist ein Betreiben des Mediationsmittels (207), bei Vorhandensein der angeforderten Netzwerkinformation in dem Informationsspeicher (309), zum Akquirieren der angeforderten Netzwerkinformation von dem Informationsspeicher.

5. Verfahren gemäß einem der Ansprüche 1 bis 4, das weiter aufweist ein Senden der angeforderten Netzwerkinformation an die Anwendung und Verwenden der angeforderten Netzwerkinformation, um die Operation der Anwendung anzupassen.

6. Verfahren gemäß einem vorhergehenden Anspruch, wobei die Netzwerkinformation eine Echtzeit-Netzwerkinformation aufweist.

7. Verfahren gemäß einem vorhergehenden Anspruch, wobei das Mediationsmittel (207) weiter aufweist Übersetzungsmittel (3153) und das Verfahren weiter aufweist:
Übersetzen der Abfrage in ein Format, das von dem Zielgerät verstanden wird;
Senden der Abfrage an das Zielgerät;
Empfangen einer Antwort auf die Abfrage, wobei die Abfrage die angeforderte Netzwerkinformation aufweist;
Übersetzen der Antwort in ein Format, das von dem Mediationsmittel verstanden wird.

8. Vorrichtung zum Akquirieren von Netzwerkinformation von einem Netzwerk, wobei das Netzwerk ein Endgerät (201) und Zielgeräte (107, 109, 111, 113, 115) aufweist, wobei die Vorrichtung ein Mediationsmittel (207) aufweist, das ausgebildet ist, in Betrieb zwischen Anwendungen, die in dem Endgerät installiert sind, und den Zielgeräten zu vermitteln, wobei das Mediationsmittel aufweist:
Empfangsmittel (315), das ausgebildet ist, in Betrieb eine Abfrage von einer Anwendung zu empfangen, wobei die Abfrage eine Netzwerkinformation von einem Zielgerät anfordert;
Prüfmittel (303), das ausgebildet ist, in Betrieb zu prüfen, ob es eine existierende Verbindung zu dem Zielgerät gibt;
Verbindungsaufbaumittel (305), das ausgebildet ist, in Betrieb eine neuen Verbindung zu dem Zielgerät aufzubauen bei Fehlen einer existierenden Verbindung;
Informationsakquisemittel, das ausgebildet ist, in Betrieb die angeforderte Netzwerkinformation über die neue Verbindung zu akquirieren.

9. Vorrichtung gemäß Anspruch 8, wobei das Mediationsmittel weiter aufweist einen Informationsspeicher (309), der eine Netzwerkinformation speichert, die von dem Zielgerät vorher akquiriert wurde; wobei das Prüfmittel (303) weiter ausgebildet ist, in Betrieb zu prüfen, ob die angeforderte Netzwerkinformation in dem Informationsspeicher enthalten ist; und wobei das Verbindungsaufbaumittel (305) weiter ausgebildet ist, in Betrieb eine neue Verbindung zu dem Zielgerät aufzubauen bei Fehlen der Netzwerkinformation in dem Informationsspeicher.

10. Digitaler Datenträger, der ein Programm von Anweisungen trägt, die ausführbar sind durch eine Verarbeitungsvorrichtung, um die Verfahrensschritte auszuführen, wie in einem der Ansprüche 1 bis 7 dargelegt.

## Revendications

1. Un procédé pour acquérir, à partir d'un réseau, des informations sur le réseau, ledit réseau comprenant un terminal d'extrémité (201) et un terminal cible (107, 109, 111, 113, 115), ledit terminal cible ayant, installés sur celui-ci :
(a) une pluralité d'applications (203, 205) ; et
(b) un moyen de médiation (207) conçu pour fonctionner comme médiateur entre ladite pluralité d'applications et ledit terminal cible, ledit procédé consistant à :
(i) recevoir au niveau dudit moyen de médiation (207) une requête provenant de l'une parmi ladite pluralité d'applications, ladite requête demandant à un terminal cible des informations sur le réseau ;
(ii) faire fonctionner ledit moyen de médiation pour :
vérifier s'il existe une connexion au dit terminal cible ;
si aucune connexion n'existe, établir une nouvelle connexion entre ledit moyen de médiation et ledit terminal cible ; et
acquérir, via ladite nouvelle connexion, lesdites informations demandées sur le réseau.

2. Un procédé selon la revendication 1, comprenant en outre l'utilisation dudit moyen de médiation (207), quand existe une connexion audit terminal cible (107, 109, 111, 113, 115), pour utiliser ladite connexion existante au dit terminal cible pour acquérir lesdites informations demandées sur le réseau.

3. Un procédé selon les revendications 1 ou 2, dans lequel ledit moyen de médiation (207) comprend une mémoire d'informations (309), ladite mémoire mémorisant les informations sur le réseau précédemment acquises à partir du terminal cible (107, 109, 111, 113, 115), ledit procédé comprenant en outre l'utilisation dudit moyen de médiation pour :
vérifier si lesdites informations demandées sur le réseau sont contenues dans ladite mémoire d'informations ;
en l'absence dans ladite mémoire d'informations desdites informations demandées sur le réseau, établir une nouvelle connexion entre ledit moyen de médiation et ledit terminal cible ; et
acquérir, via ladite nouvelle connexion, lesdites informations demandées sur le réseau.

4. Un procédé selon l'une quelconque des revendications 1 à 3, comprenant en outre l'utilisation dudit moyen de médiation (207), en présence dans ladite mémoire d'informations (309) desdites informations demandées sur le réseau, pour acquérir à partir de ladite mémoire d'informations lesdites informations demandées sur le réseau.

5. Un procédé selon l'une quelconque des revendications 1 à 4, comprenant en outre l'envoi, à ladite application, desdites informations demandées sur le réseau et l'utilisation desdites informations demandées sur le réseau pour adapter le fonctionnement de ladite application.

6. Un procédé selon l'une quelconque des revendications précédentes, dans lequel lesdites informations sur le réseau comprennent des informations en temps réel sur le réseau.

7. Un procédé selon l'une quelconque des revendications précédentes, dans lequel ledit moyen de médiation (207) comprend en outre un moyen de traduction (3153), et ledit procédé comprend en outre :
la traduction de ladite requête en un format compris par ledit terminal cible ;
l'envoi de ladite requête au dit terminal cible ;
la réception d'une réponse à ladite requête, ladite réponse comprenant lesdites informations demandées sur le réseau ;
la traduction de ladite réponse en un format compris par ledit moyen de médiation.

8. Dispositif pour acquérir, à partir d'un réseau, des informations sur le réseau, ledit réseau comprenant un terminal d'extrémité (201) et des terminaux cibles (107, 109, 111, 113, 115), ledit dispositif comprenant un moyen de médiation (207) conçu pour fonctionner comme médiateur entre des applications installées dans ledit terminal d'extrémité et lesdits terminaux cible, ledit moyen de médiation comprenant :
un moyen de réception (315) conçu pour recevoir une requête d'une application, ladite requête demandant à un terminal cible des informations sur le réseau
un moyen de vérification (303) conçu pour vérifier s'il y existe une connexion au dit terminal cible ;
un moyen d'établissement de connexion (305) conçu pour établir une nouvelle connexion au dit terminal cible si aucune connexion n'existe ;
un moyen d'acquisition d'informations, conçu pour acquérir, via ladite nouvelle connexion, lesdites informations demandées sur le réseau.

9. Dispositif selon la revendication 8, dans lequel ledit moyen de médiation comprend en outre une mémoire d'informations (309) mémorisant les informations sur le réseau précédemment acquises à partir dudit terminal cible ; dans lequel ledit moyen de vérification (303) est en outre conçu pour vérifier si lesdites informations demandées sur le réseau sont contenues dans ladite mémoire d'information ; et ledit moyen d'établissement de connexion (305) est en outre conçu pour établir une nouvelle connexion au dit terminal cible en absence desdites informations sur le réseau dans ladite mémoire d'informations.

10. Un support de données numériques servant de support à un programme d'instructions exécutables par un appareil de traitement, pour réaliser les étapes du procédé comme présenté dans l'une quelconque des revendications 1 à 7.
